# EUROPÄISCHE PATENTANMELDUNG

(11) **EP 2 838 058 A1**
(43) Veröffentlichungstag der Anmeldung: **18.02.2015**
(21) Anmeldenummer: 13180276.1
(22) Anmeldetag: 13.08.2013
(51) Int. Cl.: G06Q 10/06

(54) **Verfahren und System zur Optimierung eines Produktionsprozesses**

(71) Anmelder: SCHNEIDER ELECTRIC AUTOMATION GMBH, 97828 Marktheidenfeld (DE)
(72) Erfinder: Patri, Michael, 63741 Aschaffenburg (DE); Kaemmerer, Ulrich, 63263 Neu-Isenburg (DE)
(74) Vertreter: Stoffregen, Hans-Herbert

(57) **Zusammenfassung**

Die Erfindung bezieht sich auf ein Verfahren zur Optimierung eines Produktionsprozesses, umfassend die Verfahrensschritte:
- Erfassen des Gesamt-Energieverbrauchs eines ersten Durchlaufs des Produktionsprozesses sowie des aktuellen Energiepreises und Berechnen der aktuellen Energiekosten;
- Berechnen der Gesamtkosten der Menge produzierter Güter aus Gesamt-Energiekosten, Fixkosten und ggfs. variablen Kosten;
- Erfassen einer Ist-Menge und/oder eines Typs der produzierten Güter sowie Erfassen eines aktuellen Marktwertes der produzierten Güter und Berechnen eines Gesamterlöses für die produzierten Güter;
- Vergleichen der Gesamtkosten mit dem Gesamterlös;
- Vorgabe einer Soll-Menge produzierter Güter für weitere Durchläufe des Produktionsprozesses auf der Grundlage des Vergleichs der Gesamtkosten mit dem Gesamterlös, wobei die Soll-Menge erhöht oder verringert wird, bis ein maximaler Unterschied zwischen Gesamterlös und Gesamtkosten erreicht ist.

## Beschreibung

Die Erfindung bezieht sich auf ein Verfahren und ein System zur Optimierung eines Produktionsprozesses.

In der DE 10 2011 102 776 A1 ist eine Produktionsmaschine und ein Verfahren zum Betrieb der Produktionsmaschine beschrieben. Die Produktionsmaschine, insbesondere eine Kunststoff verarbeitende Maschine, mit einer Mehrzahl von Leistungsaufnehmern, weist eine Mastereinrichtung zur Koordination der elektrischen Leistungsaufnahme für die Leistungsaufnehmer auf. Die Mastereinrichtung weist eine zentrale Steuerungs- und Regeleinrichtung auf, in der Parameter der einzelnen Leistungsabnehmer der Produktionsmaschine hinterlegt oder hinterlegbar sind, wobei die Parameter miteinander abgleichbar sind und wobei die Leistungsabnehmer bei einer Überschreitung eines vorgegebenen Parameter-Maximalwertes nicht oder zeitlich verzögert einschaltbar sind.

Das bekannte Verfahren zeichnet sich dadurch aus, dass Daten, insbesondere von Parameter-, Minimal- oder -Maximalwerten der Leistungsaufnehmer, Strompreise, Strompreiskurven oder Zeitangaben abgerufen und/oder in der Mastereinrichtung hinterlegt werden. Die Daten werden durch die Mastereinrichtung ausgewertet, wobei eine Koordination der Daten der elektrischen Leistungsaufnahme mehrerer Leistungsaufnehmer in Abhängigkeit von ihrer Relevanz für einen Prozesszyklus der Produktionsmaschine durch Bereitstellen einer Strategie zur energetisch günstigsten Abfolge der Aktivierung der Leistungsaufnehmer in Abhängigkeit von den Parametern erfolgt. Des Weiteren erfolgt ein Steuern oder Regeln von Einschaltvorgängen, - abfolgen und/oder der Leistungsaufnahme der Leistungsaufnehmer der Produktionsmaschine in Abhängigkeit von den Daten.

In der US 2009/0012916 A1 sind ein Energieoptimierungssystem sowie ein Verfahren zur Optimierung eines Energieverbrauchs beschrieben. Das System sowie das Verfahren ermöglicht Verbrauchern die Energiekosten zu minimieren, indem Energie aus dem Energiemarkt bezogen wird, wenn die Energiekosten niedrig sind. Dazu werden Daten einer Datenbank in Verbindung mit Informationen betreffend Energiemarktpreise verknüpft, um zu bestimmen, wann und wie lange ein Abnehmer seine Lasten einschalten soll.

Energiemanagementsysteme nach dem Stand der Technik steuern energieaufnehmende Geräte bzw. Gerätegruppen in Abhängigkeit von deren Energiedaten, wie z. B. Energieverbrauch. Ebenfalls kommen Prozess- und Geräte-/Gerätegruppen-Abhängigkeiten in Betracht. Zum Beispiel kann ein Gerät, eine Gerätegruppe und/oder ein Teilprozess nur abgeschaltet werden, wenn der zugehörige Prozess nicht oder nur gewollt beeinflusst wird. Folglich enthalten Energiemanagementsysteme Wissen/Informationen über den jeweils auszuführenden Prozess.

Ein Energiemanagementsystem nach dem Stand der Technik schaltet energieaufnehmende Geräte bzw. Gerätegruppen nach einem zuvor definierten Schema, wobei z. B. eine festgelegte Reihenfolge von Geräten abgeschaltet werden kann, wenn ein vorhergesagter Energieaufnahmewert voraussichtlich überschritten wird. Auch besteht die Möglichkeit, eine festgelegte Anzahl von Geräten bzw. Gerätegruppen in der Abschaltung zu variieren, z. B. durch ein Rotationsverfahren.

Des Weiteren ist zur Abrechnung im industriellen Bereich der Elektrizität bekannt, dass die Kosten meist über eine 15 min-Taktung berechnet werden. Solang der Verbrauch eines Gerätes unterhalb einer zuvor definierten Grenze liegt, sind die Kosten gering. Im Falle eines Überschreitens der definierten Energiegrenze kommen allerdings hohe Kosten auf den Verbraucher zu. Daher wird der Verbrauch des 15 min-Verbrauchswertes zuvor antizipiert. Falls dieser Wert oberhalb der definierten Grenze liegt, werden Geräte bzw. Gerätegruppen abgeschaltet, um die Energieaufnahme zu reduzieren und damit den 15 min-Verbrauchswert unter die definierte Grenze zu drücken.

Der Grund liegt in der Vermeidung von hohen Kosten bei Überschreitung der definierten Energieaufnahme-Grenze. Die Abschaltung dieser Geräte bzw. Gerätegruppen wird Lastabwurf (load shedding) genannt.

Aus dem Bereich intelligenter Stromnetze (Smart-Grid) ist bekannt, Energiepakete zu kaufen bzw. zu verkaufen, wobei eine flexible Reaktion auf oben genannte definierte Energie-Grenzwerte von großer Bedeutung ist. Falls die Energiekosten einen möglichen Erlös einer Produktion übersteigen, macht es betriebswirtschaftlich keinen Sinn, die Produktion weiterlaufen zu lassen. Aufgrund der volatilen Strompreise ist eine ständige Interaktion mit den intelligenten Stromnetzen notwendig.

Davon ausgehend liegt der vorliegenden Erfindung die Aufgabe zugrunde, ein Verfahren und ein System der eingangs genannten Art derart weiterzubilden, dass eine Optimierung des Produktionsprozesses unter Berücksichtigung einer dynamischen Änderung von Produktionskosten und Produktionserlös erfolgt.

Die Aufgabe wird erfindungsgemäß durch ein Verfahren gelöst, umfassend die Verfahrensschritte:
- Erfassen des Gesamt-Energieverbrauchs eines ersten Durchlaufs des Produktionsprozesses sowie des aktuellen Energiepreises und Berechnen der aktuellen Energiekosten;
- Berechnen der Gesamtkosten der Menge produzierter Güter aus Gesamt-Energiekosten, Fixkosten und ggfs. variablen Kosten;
   Erfassen einer Ist-Menge und/oder eines Typs der produzierten Güter sowie Erfassen eines aktuellen Marktwertes der produzierten Güter und Berechnen eines Gesamterlöses für die produzierten Güter;
- Vergleichen der Gesamtkosten mit dem Gesamterlös;
- Vorgabe einer Soll-Menge produzierter Güter für weitere Durchläufe des Produktionsprozesses auf der Grundlage des Vergleichs der Gesamtkosten mit dem Gesamterlös, wobei die Soll-Menge erhöht oder verringert wird, bis ein maximaler Unterschied zwischen Gesamterlös und Gesamtkosten erreicht ist

In einem ersten Verfahrensschritt werden Gesamtkosten des Produktionsprozesses aus den aktuellen und zukünftigen Energiekosten, den Fixkosten und variablen Kosten berechnet. Die Energiekosten werden auf der Basis eines aktuellen oder zukünftigen Gesamt-Energieverbrauchs des Produktionsprozesses sowie aktueller und/oder zukünftiger Energiepreise berechnet. Ferner wird die Ist-Menge produzierter Güter erfasst und mittels eines aktuellen Marktwertes multipliziert um den Gesamterlös für die Menge produzierter Güter zu berechnen.

In einem weiteren Verfahrensschritt erfolgt ein Vergleich der berechneten Gesamtkosten mit dem Gesamterlös der Menge produzierter Güter mittels einer Optimierungseinrichtung. Die Optimierungseinrichtung liefert auf der Grundlage des Vergleichs der Gesamtkosten mit dem Gesamterlös eine Soll-Menge produzierter Güter als Sollwert für den Produktionsprozess, die je nach Gesamterlös und Gesamtkosten der Güter angepasst wird. Die Soll-Menge wird erhöht bzw. verringert bis ein maximaler positiver Profit, d. h., ein maximaler positiver Unterschied zwischen Gesamterlös und Gesamtkosten erreicht ist. Übersteigen die Gesamtkosten den Erlös (negativer Profit) wird der Produktionsprozess gestoppt oder die Vorgabe einer Soll-Menge so eingestellt, dass der Verlust minimiert wird.

Mit dem erfindungsgemäßen Verfahren können somit die Energiekosten und der Gesamterlös des Produktionsprozesses unter technischen und betriebswirtschaftlichen Aspekten optimiert werden. Da sowohl die Energiekosten, wie Kosten für Strom, Öl, Gas usw. als Eingangsgröße als auch der Gesamterlös des Produktionsprozesses als Ausgangsgröße nicht konstant, sondern zeitabhängig und variabel sind, kann mit dem erfindungsgemäßen Verfahren die Optimierung des Produktionsprozesses an die dynamische Änderung der Eingangsgrößen und Ausgangsgrößen angepasst werden.

Die aus dem Stand der Technik bekannte selektive Abschaltung von insbesondere einzelnen Verbrauchern nach starrem Schema wird gemäß der Erfindung durch einen dynamischen Lösungsansatz ersetzt.

Durch die dynamische Anpassung des Produktionsprozesses an die jeweils geltenden Energiekosten und Marktwerte der produzierten Güter kann zu jedem Zeitpunkt eine Gesamtoptimierung des Profits (Ertrags) einzelner Teilprozesse, Geräte, Komponenten, Subsysteme oder des gesamten Systems oder Produktionsprozesses ermöglicht werden.

Gemäß einer bevorzugten Ausführungsform ist vorgesehen, dass der Gesamt-Energieverbrauch des Produktionsprozesses durch einen einzigen Energiemesser gemessen wird. Alternativ besteht die Möglichkeit, den Teil-Energieverbrauch einzelner Teilprozesse durch jeweils einzelne Energiemesser zu erfassen und den Gesamt-Energieverbrauch durch Addition der Einzel-Energieverbräuche der einzelnen Teil-Prozesse zu ermitteln, so dass Teil-Prozesse einzeln bewertet und ggfs. abgeschaltet werden können.

Ein weiteres bevorzugtes Verfahren zeichnet sich dadurch aus, dass die Gesamtkosten sowie der Gesamterlös antizipiert werden und dass eine Vorgabe von Soll-Menge produzierter Güter auf der Basis des Vergleichs der antizipierten Gesamtkosten mit dem antizipierten Gesamterlös vorgegeben wird.

Eine weitere bevorzugte Verfahrensweise zeichnet sich dadurch aus, dass der Produktionsprozess in Teilprozesse unterteilt wird, wobei jedem Teilprozess Teil-Energiekosten sowie Teil-Erlöse zugeordnet sind und wobei mittels der Optimierungseinheit ein Vergleich der Teil-Energiekosten mit dem Teil-Erlös durchgeführt wird und ein Abschalten des Teil-Prozesses erfolgt, wenn die Teil-Energiekosten größer als die Teil-Erlöse sind.

Zur Bestimmung der Energieaufnahme kann die elektrische Energie oder der Verbrauch von Energieträgern wie Wasser, Luft, Gas und/oder Öl gemessen werden.

Des Weiteren besteht die Möglichkeit, eine erlös-optimierte dynamische Anpassung des Energieverbrauchs zu ermöglichen. Beispielsweise beträgt die Taktung des Energieverbrauchs, d. h. die Stabilität der Energiekosten, für Großverbraucher seitens der Energieversorgungsunternehmen etwa 15 Minuten. Bei einem Überschreiten von bestimmten Last-Schwellwerten steigen die Energiekosten überdurchschnittlich stark an. Ein häufigeres Überschreiten dieser Schwellwerte in einem Jahr kann dazu führen, dass die Energiekosten stark ansteigen, was mit großem finanziellem Schaden für ein Unternehmen verbunden ist. Durch das erfindungsgemäße Verfahren können Lastspitzen ausgeglichen bzw. vermieden werden.

Aus Obigem ergibt sich, dass durch das erfindungsgemäße Verfahren Geräte bzw. Gerätegruppen bzw. Prozesse und Teilprozesse dynamisch je nach Erlös-/Kostenverlauf abgeschaltet werden können. Damit ist eine Optimierung des Gewinns bzw. Profits möglich je nach zeitlicher Lage der Produktion in Abhängigkeit von Kosten und Erlös.

Eine weitere bevorzugte Verfahrensweise zeichnet sich dadurch aus, dass bei Abschaltung des Produktionsprozesses die zuvor an einem Energiemarkt erworbene Energie wieder dem Energiemarkt zur Verfügung gestellt werden kann, falls dies im Vergleich zu einer eigenen Warenproduktion wirtschaftlich sinnvoll ist.

Des Weiteren bezieht sich die Erfindung auf ein System zur Optimierung eines Produktionspozesses. Ein System zur Durchführung des Verfahrens umfasst eine Optimierungseinheit, die mit einem Unternehmens-Ressourcen-Planungssystem (ERP System) gekoppelt ist, um einen aktuellen Marktwert der Güter sowie Fixkosten und variable Kosten der Produktion abzufragen. Ferner ist die Optimierungseinheit mit einem oder mehreren Energiemessern zur Erfassung des Energieverbrauchs des Produktionsprozesses sowie mit einem Erfassungsmittel zur Erfassung der Menge und des Typs der produzierten Güter gekoppelt.

Des Weiteren ist die Optimierungseinheit über ein Kommunikationsnetz mit einer Energiebörse bzw. einem Energieversorgungsunternehmen zur Abfrage der aktuellen Energiepreise verbunden.

In der Optimierungseinheit werden die Gesamtkosten aus Energiekosten, Fixkosten und variablen Kosten berechnet und mit dem Erlös der Produktion verglichen. In Abhängigkeit des Vergleichs wird eine Soll-Menge zu produzierender Güter für den Produktionsprozess vorgegeben.

Der Optimierungseinheit stehen durch Verbindung mit dem Unternehmens-Ressourcen-Planungs-System, dem Kommunikationssystem, dem Energiemesser sowie der Erfassungseinheit alle notwendigen Daten zur Verfügung, die zur Entscheidung notwendig sind, d. h. dass die Gesamtkosten und der Gesamterlös in Bezug gesetzt werden können, um zu jedem Zeitpunkt den günstigsten Energiezustand des Produktionsprozesses, eines Teilprozesses bzw. Gerätes bzw. Gerätegruppe zu bestimmen. Nebenbedingungen wie z. B. Prozessbeziehungen oder Geräteabhängigkeiten sind der Optimierungseinheit ebenso bekannt wie die maßgeblichen Parameter Kosten / Erlös für die Berechnung eines Energiezustandes.

Des Weiteren besteht die Möglichkeit, mehrere Optimierungseinheiten miteinander zu verbinden, indem eine Optimierungseinheit für einen Prozess / Teilprozess bzw. Gerät / Gerätegruppe zuständig ist bzw. die Optimierungseinheiten sich gegenseitig absprechen, d. h. kommunikativ verbunden sind, um eine energetische Steuerung der Prozesse bzw. Teilprozesse oder Geräte / Gerätegruppen zu erreichen.

Durch das erfindungsgemäße Verfahren und das erfindungsgemäße System wird ein Lastabwurfverfahren realisiert, welches neben technischen Bedingungen auch betriebswirtschaftliche Parameter berücksichtigt. Somit können mögliche Erlöseinbußen den eingesparten Energiekosten gegenübergestellt werden. Dadurch ist eine direkte Entscheidung möglich, ob es sinnvoll ist, ein Gerät oder eine Gerätegruppe aufgrund von zu hohen Energiekosten abzuschalten. Folglich kann eine betriebswirtschaftliche Automatisierung erfolgen, die eine Abschaltung der Geräte bzw. Gerätegruppen regelt.

Der Grund für eine Abschaltung von Geräten bzw. Gerätegruppen eines Prozesses bzw. Teilprozesses ist, dass aufgrund von z. B. normalerweise kurzzeitigen Lastverbräuchen die vertraglich geregelten Energieabnahmemengen, z. B. Lastspitzen, überschritten werden. Diese Überschreitungen sind teuer und sollen möglichst vermieden werden. Mittels des erfindungsgemäßen Verfahrens kann der Profit maximiert werden, da entweder die Geräte / Gerätegruppen abgeschaltet oder die höheren Energiekosten in Kauf genommen werden, je nach Profitmaximierung, d. h. Vergleich der Gesamtkosten mit dem Gesamterlös.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung von der Zeichnung zu entnehmenden bevorzugten Ausführungsbeispielen.

Es zeigen:
- Fig. 1: ein Blockschaltbild einer ersten Ausführungsform eines Systems zur Optimierung eines Produktionsprozesses,
- Fig. 2: ein Blockschaltbild einer zweiten Ausführungsform eines Systems zur Optimierung eines Produktionsprozesses,
- Fig. 3: ein Blockschaltbild des Produktionsprozesses mit Teilprozessen,
- Fig. 4: ein Kosten-Diagramm, welches den Anteil der Energiekosten, variablen Kosten und Fixkosten in Abhängigkeit der Produktionsmenge zeigt,
- Fig. 5: ein Erlös-Diagramm, welches einen proportionalen und einen nicht-proportionalen Verlauf des Erlöses in Abhängigkeit der Produktionsmenge zeigt,
- Fig. 6: ein Profit-Diagramm, welches den Verlauf des Profits in Abhängigkeit der Produktionsmenge zeigt und
- Fig.7: ein Vier-Quadranten-Diagramm, welches die Abhängigkeiten des Marktwertes produzierter Güter in Abhängigkeit des Energiepreises zeigt.

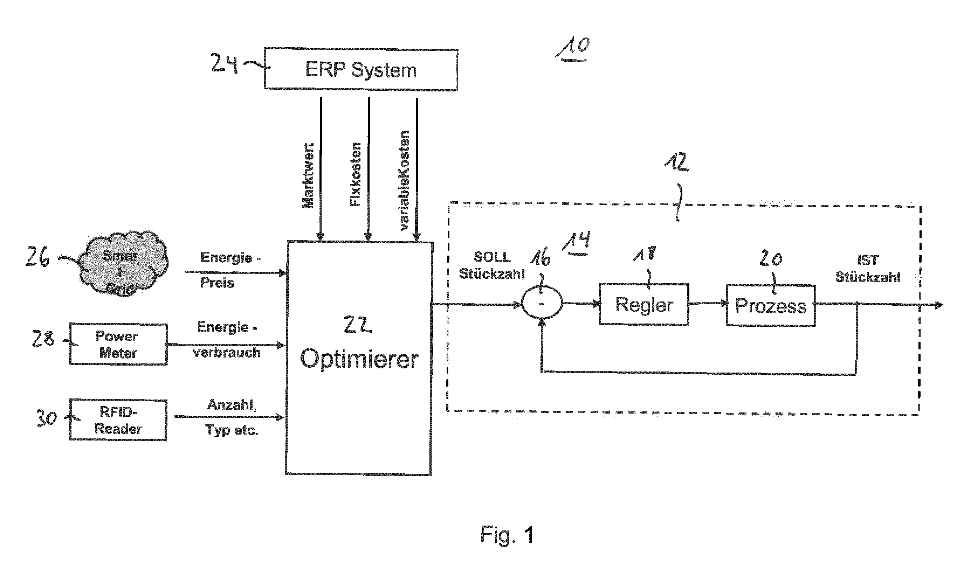

Fig. 1 zeigt rein schematisch ein Blockschaltbild eines Systems 10 zur Steuerung eines Produktionsprozesses 12, der rein schematisch als Regelstrecke 14 dargestellt ist, umfassend einen Vergleicher 16, einen Regler 18 sowie den Produktionsprozess 20 als Regelstrecke. Das System 10 umfasst eine Optimierungseinheit 22, die mit einem Unternehmens-Ressourcen-Planungssystem 24 (Enterprise Ressource Planning, ERP) verbunden ist, um z. B. den aktuellen Marktwert der produzierten Güter, die Fixkosten und variablen Kosten der Produktion abzufragen.

Des Weiteren ist die Optimierungseinheit 22 über ein Kommunikationsnetz 26 wie beispielsweise Internet mit einem Energieversorgungsunternehmen (Smart Grid) oder einer Energiebörse verbunden, um aktuelle Energiepreise abzufragen. Ferner ist die Optimierungseinheit mit einem Energiemesser 28 verbunden, welcher die von dem Produktionsprozess 12 aufgenommene Energie erfasst und der Optimierungseinheit 22 zur Verfügung stellt. Schließlich ist die Optimierungseinheit 22 mit einem Erfassungsmittel wie RFID-Reader oder Durchflussmesser verbunden, welches die aktuelle Ist-Menge und/oder den aktuellen Typ produzierter Güter erfasst und der Optimierungseinheit 22 zur Verfügung stellt. Je nach Erfassungsmittel kann auch der aktuelle Typ der produzierten Güter messtechnisch erfasst werden, wie z.B. mit einem RFID-Reader.

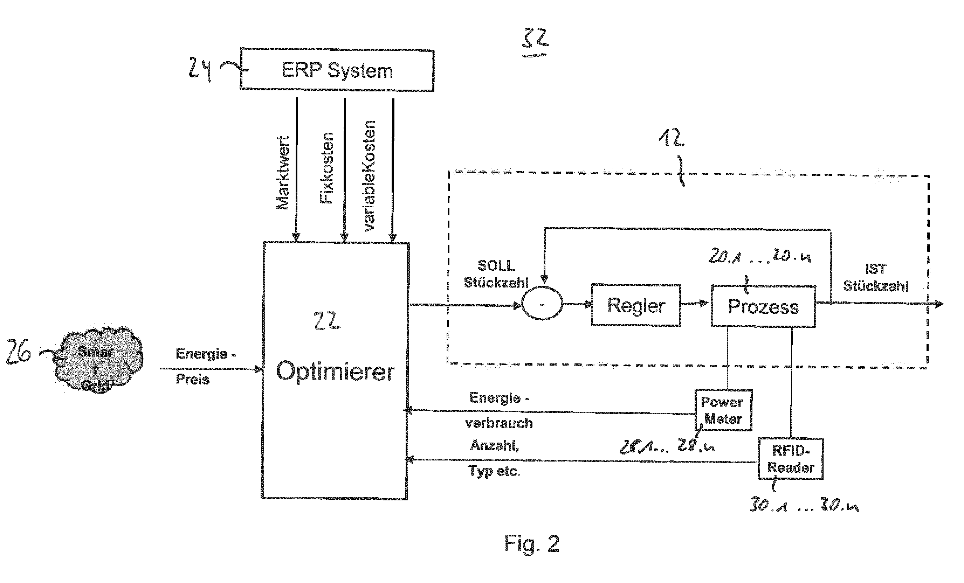

Fig. 2 zeig eine alternative Ausführungsform eines Systems 32 zur Steuerung des Produktionsprozesses 12, wobei der Produktionsprozess Teilprozesse 20.1 ... 20.n aufweist, wobei jeder Teilprozess einen Energiemesser 28.1 ... 28.n sowie ein Produktionsmengen-Erfassungsmittel 30.1 ...30.n umfasst.

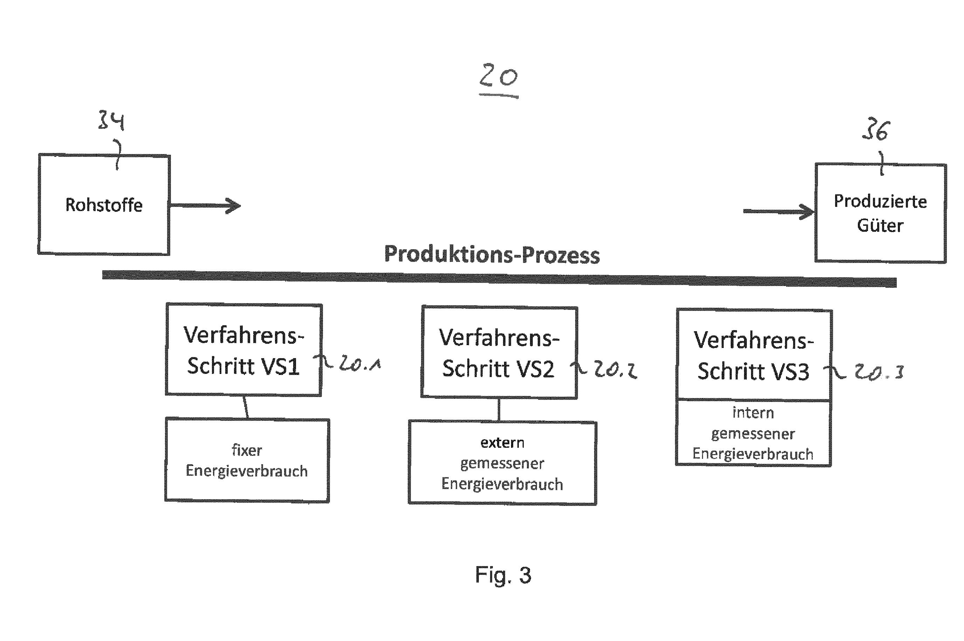

Der Produktionsprozess 20.1 ...20.n ist rein schematisch in Fig. 3 dargestellt. Dieser umfasst Teilprozesse 20.1, 20.2, 20.3, durch die ein Rohstoff 34 zu einem produzierten Gut 36 verarbeitet wird. Im dargestellten Beispiel hat der Teilprozess 20.1 einen fixen Energieverbrauch, der Teilprozess 20.2 einen extern gemessenen Energieverbrauch und der Teilprozess 20.3 einen intern gemessenen Energieverbrauch. Jedem Teilprozess 20.1 ... 20.n können Energiekosten, Fixkosten und variable Kosten sowie Erlöse zugeordnet werden, die sich im Laufe der Zeit ändern können.

Nachfolgend wird das erfindungsgemäße Verfahren beschrieben.

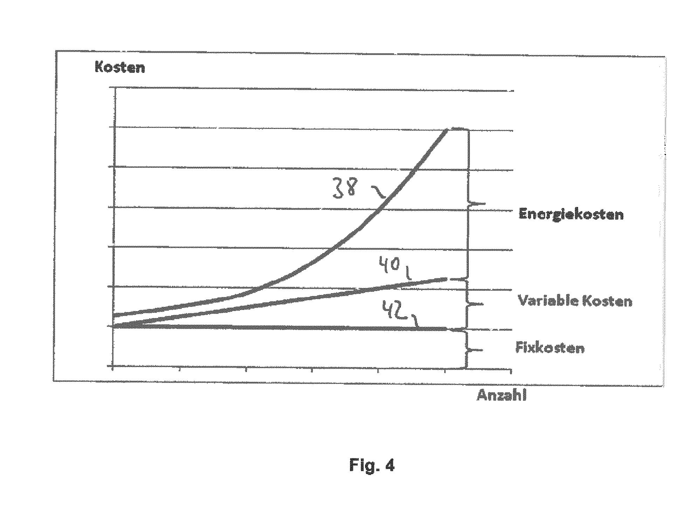

Fig. 4 zeigt die Kosten der Produktion in Abhängigkeit der Anzahl bzw. Menge produzierter Güter, wobei eine Kurve 38 die Gesamtkosten in Abhängigkeit der Anzahl der produzierten Güter darstellt. Der Bereich zwischen Kurve 40 und Kurve 38 stellt den Anteil der Energiekosten dar, der Bereich zwischen Kurve 42 und Kurve 40 den Anteil der variablen Kosten und der Bereich zwischen X-Achse und Kurve 42 den Anteil der Fixkosten dar.

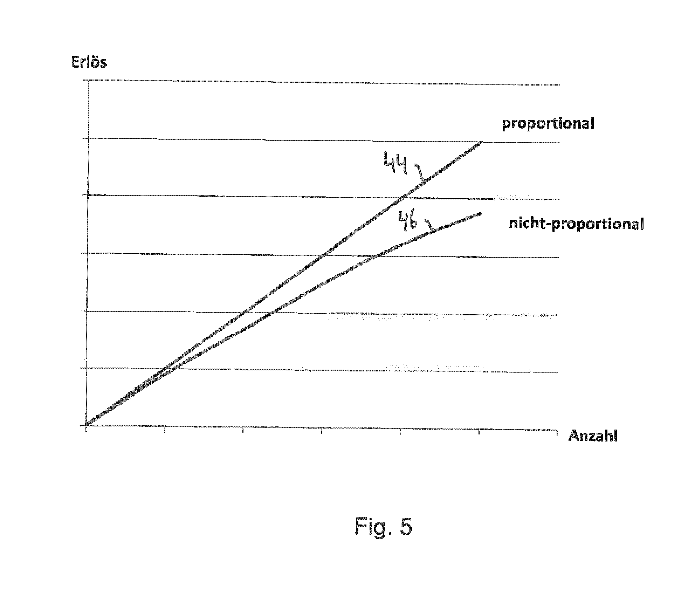

Fig. 5 zeigt den Verlauf des Erlöses in Abhängigkeit von der Anzahl bzw. der Menge produzierter Güter, wobei eine Kurve 44 einen proportionalen Verlauf und eine Kurve 46 einen nicht proportionalen Verlauf des Erlöses in Abhängigkeit der Anzahl bzw. Menge produzierter Güter zeigt.

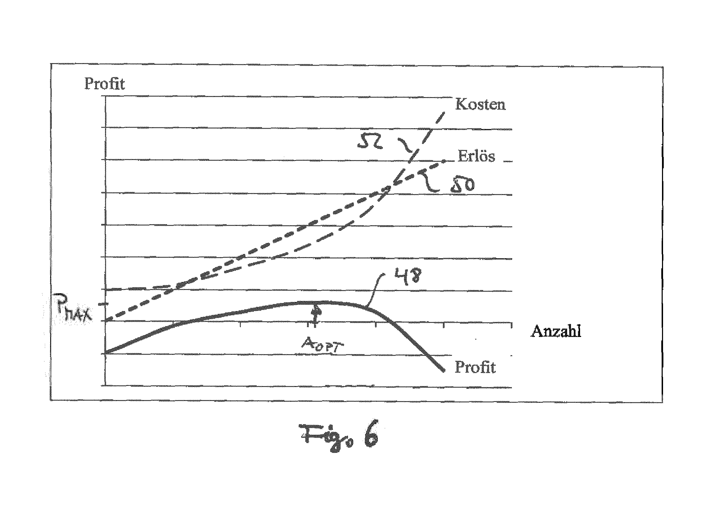

Fig. 6 zeigt eine Kurve 48 den Verlauf des Profits in Abhängigkeit von der Anzahl bzw. der Menge produzierter Güter. Die Kurve 48 ergibt sich aus einer Kurve 50 des Gesamterlöses der produzierten Güter durch Subtraktion einer Kurve 52 der Gesamtkosten über die Anzahl bzw. Menge produzierter Güter. Die Kurve 48 des Profits zeigt im Maximum "maximaler Profit", einen Arbeitspunkt des Produktionsprozesses 12, der erfindungsgemäß durch die Optimierungseinheit 22 eingestellt wird.

Gemäß der Erfindung ist vorgesehen, dass in einem ersten Durchlauf eines Produktionsprozesses für ein oder mehrere Güter mittels des Energiemessers 28 oder der einzelnen Energiemesser 28.1 .... 28.n der Gesamt-Energieverbrauch für den Produktionsprozess oder Einzel-Energieverbrauche für Teil-Produktionsprozesse erfasst wird. Gleichzeitig wird ein aktueller Energiepreis mittels der Optimierungseinheit abgefragt, so dass auf der Grundlage des Gesamt-Energieverbrauchs bzw. der Summe der Einzel-Energieverbrauche die Gesamt-Energiekosten berechnet werden können. Des Weiteren werden Fixkosten wie Miete sowie variable Kosten wie Materialkosten, oder Löhne der Produktion berücksichtigt, die von dem Unternehmens-Ressourcen-Planungssystem 24 zur Verfügung gestellt und durch die Optimierungseinheit 22 abgefragt werden.

Des Weiteren wird die Anzahl bzw. die Menge der bei dem ersten Durchlauf eines Produktionsprozesses produzierten Güter mittels der Erfassungseinheit 30 oder der Erfassungseinheiten 30.1 ... 30.n erfasst.

Auf der Grundlage der Energiekosten, Fixkosten und/oder variablen Kosten des ersten Durchlaufs eines Produktionsprozesses und unter Berücksichtigung der Anzahl bzw. Menge der produzierten Güter können somit in der Optimierungseinheit 22 Gesamtkosten pro Stück bzw. Menge aller produzierten Güter berechnet werden.

Erfindungsgemäß ist vorgesehen, dass vor und/oder während eines weiteren Durchlaufs des Produktionsprozesses die Gesamtkosten als Funktion der Anzahl bzw. Menge produzierter Güter auf der Grundlage aktueller Energiepreise, Fixkosten und variabler Kosten berechnet und ggfs. als Funktion abgespeichert werden, wie dies in Fig. 4 dargestellt ist.

Unabhängig davon werden auf der Grundlage eines aktuellen Marktwertes der Güter, der durch das Unternehmens-Ressourcen-Planungssystem 24 zur Verfügung gestellt und durch die Optimierungseinheit 22 abgefragt wird, der Gesamterlös als Funktion der Anzahl bzw. Menge der produzierten Güter berechnet und als Funktion dargestellt, wie dies in Fig. 5 gezeigt ist.

Vor und/oder während eines weiteren Durchlaufs des Produktionsprozesses wird die Erlösfunktion von der Kostenfunktion subtrahiert, um einen Profit als Funktion über die Anzahl zu erhalten. In einem weiteren Schritt wird ein Maximum der Profit-Funktion bestimmt, welches bei einer optimalen Anzahl Aₒₚₜ bzw. Menge Mₒₚₜ erreicht wird. Auf der Grundlage der optimalen Anzahl Aₒₚₜ bzw. optimalen Menge Mₒₚₜ wird sodann der nächstfolgende Durchgang des Produktionsprozesses durchgeführt.

Sollten sich während eines Produktionsprozesses Energiekosten und/oder Marktwerte der Güter ändern, so dass die von der Optimierungseinheit vorgegebene optimale Anzahl bzw. Menge von der aktuell vorgegebenen Anzahl bzw. Menge abweicht, kann die Optimierungseinheit 22 derart in den Produktionsprozess eingreifen, dass die Soll-Menge produzierter Güter erhöht oder verringert wird, bis ein maximaler Unterschied zwischen Gesamterlös und Gesamtkosten erreicht ist.

Der Eingriff in den Produktionsprozess kann beispielsweise das Abschalten des Produktionsprozesses, das Abschalten einzelner Teil-Produktionsprozesse sowie das Zuschalten einzelner Teil-Produktionsprozesse umfassen.

Bei einem Abschalten des Produktionsprozesses oder von Teil-Produktionsprozessen kann die Optimierungseinheit 22 des Weiteren nicht benötigte Energie einem Energiemarkt zu aktuellen Energiepreisen zur Verfügung stellen.

Gemäß Fig. 2 kann der Produktionsprozess 12 aus Teilprozessen 20.1 ... 20.n bestehen, wobei jedem Teilprozess ein Energiemesser 28.1 ... 28.n sowie eine Produkt-Erfassungseinheit 30.1 ... 30.n zugeordnet sein kann. Jedem Prozess werden Energiekosten, Fixkosten und variable Kosten sowie zugehörige Erlöse zugeordnet, die sich im Laufe der Zeit ändern können. Sodann erfolgt ein Vergleich der Energiekosten und Gesamtkosten mit dem zugehörigen Erlös, wobei in der Optimierungseinheit 22 eine Entscheidung getroffen wird, ob es sich lohnt, den Prozess bzw. die Produktionsmenge zu reduzieren oder auf gleichem Niveau weiterlaufen zu lassen oder zu erhöhen.

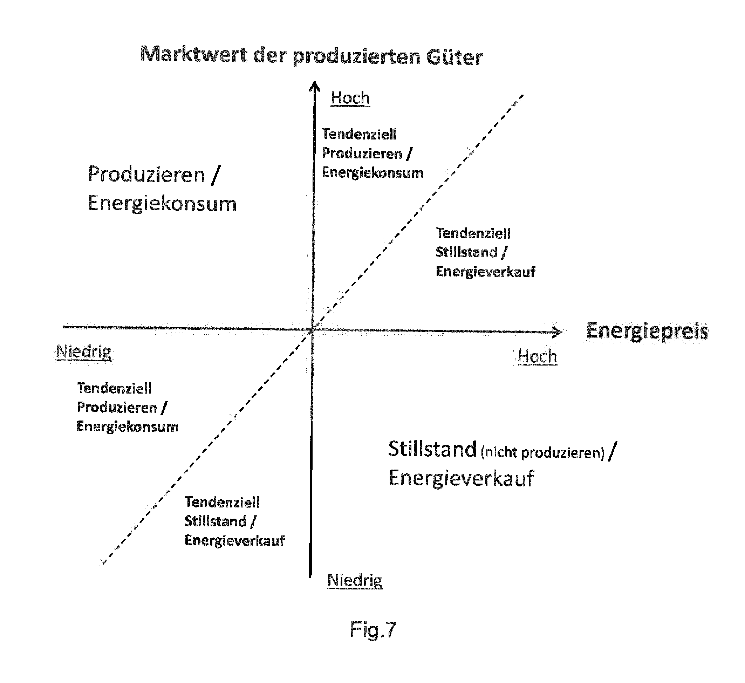

Fig. 7 zeigt ein Vier-Quadranten-Diagramm des durch die erfindungsgemäße Optimierungseinheit 22 gesteuerten Produktionsprozesses. Daraus ergibt sich, dass bei hohen Energiepreisen und niedrigem Marktwert der produzierten Güter der gesamte Produktionsprozess oder einzelne Teilprozesse abgeschaltet werden können mit der Folge, dass die bereits eingekaufte Energie nun zu marktüblichen Preisen auf dem Energiemarkt zum Verkauf angeboten werden kann.

Bei niedrigen Energiepreisen und hohem Marktwert der produzierten Güter laufen alle Produktionsprozesse, was auch mit hohem Energieverbrauch verbunden ist. In dem ersten und dritten Quadranten, d. h, bei hohen Energiekosten und hohem Marktwert bzw. niedrigen Energiekosten und niedrigem Marktwert entscheidet die Optimierungseinheit 22 durch Vorgabe der Soll-Menge der produzierten Güter, ob tendenziell eine Produktion stattfindet oder die Produktion stillsteht.

## Patentansprüche

1. Verfahren zur Optimierung eines Produktionsprozesses, umfassend die Verfahrensschritte:
- Erfassen des Gesamt-Energieverbrauchs eines ersten Durchlaufs des Produktionsprozesses sowie des aktuellen Energiepreises und Berechnen der aktuellen Energiekosten;
- Berechnen der Gesamtkosten der Menge produzierter Güter aus Gesamt-Energiekosten, Fixkosten und ggfs. variablen Kosten;
- Erfassen einer Ist-Menge und/oder eines Typs der produzierten Güter sowie Erfassen eines aktuellen Marktwertes der produzierten Güter und Berechnen eines Gesamterlöses für die produzierten Güter;
- Vergleichen der Gesamtkosten mit dem Gesamterlös;
- Vorgabe einer Soll-Menge produzierter Güter für weitere Durchläufe des Produktionsprozesses auf der Grundlage des Vergleichs der Gesamtkosten mit dem Gesamterlös, wobei die Soll-Menge erhöht oder verringert wird, bis ein maximaler Unterschied zwischen Gesamterlös und Gesamtkosten erreicht ist

2. Verfahren nach Anspruch 1,
**dadurch gekennzeichnet,**
**dass** der Gesamt-Energieverbrauch durch einen einzigen Energiemesser gemessen wird.

3. Verfahren nach Anspruch 1,
**dadurch gekennzeichnet,**
**dass** ein Typ der produzierten Güter ebenfalls messtechnisch erfasst wird.

4. Verfahren nach zumindest einem der vorhergehenden Ansprüche,
**dadurch gekennzeichnet,**
**dass** der Produktionsprozess eine Vielzahl von Teilprozessen aufweist, wobei jedem Teilprozess Teil-Energiekosten sowie Teil-Erlöse zugeordnet werden und wobei ein Teil-Energieverbrauch eines Teilprozesses als fixer Energieverbrauch gespeichert wird oder mittels eines externen oder internen Energiemessers gemessen wird.

5. Verfahren nach zumindest einem der vorhergehenden Ansprüche,
**dadurch gekennzeichnet,**
**dass** die Kosten des Teilprozesses mit dem Erlös des Teilprozesses verglichen werden und dass der Teilprozess in einen höheren bzw. niedrigeren Energiezustand geschaltet wird, so dass der maximale Profit, d.h. der maximale Unterschied zwischen Gesamterlös und Gesamtkosten, bzw. der minimale Verlust erreicht wird.

6. Verfahren nach zumindest einem der vorhergehenden Ansprüche,
**dadurch gekennzeichnet ,**
**dass** als Energieverbrauch der Verbrauch elektrischer Energie sowie von Energieträgern wie Gas, Wasser, Öl sowie Luft gemessen wird.

7. Verfahren nach zumindest einem der vorhergehenden Ansprüche,
**dadurch gekennzeichnet ,**
**dass** die in dem Gesamtprozess oder einem Teilprozess anfallenden Energiekosten, Fixkosten und/oder variablen Kosten sowie Erlöse antizipiert und mit tatsächlichen Kosten und tatsächlichen Erlösen verglichen werden.

8. Verfahren nach zumindest einem der vorhergehenden Ansprüche,
**dadurch gekennzeichnet ,**
**dass** der Produktionsprozess und/oder Teilprozess dynamisch entsprechend des Verlaufs der Gesamtkosten und/oder des Gesamterlöses bzw. der Kosten und Erlöse der entsprechenden Teilprozesse abgeschaltet bzw. reduziert werden.

9. Verfahren nach zumindest einem der vorhergehenden Ansprüche,
**dadurch gekennzeichnet,**
**dass** bei Abschaltung des Produktionsprozesses die zuvor an einem Energiemarkt erworbene Energie dem Energiemarkt zur Verfügung gestellt wird.

10. Verfahren nach zumindst einem der vorhergehenden Ansprüche,
**dadurch gekennzeichnet,**
**dass** die antizipierte benötigte Energie über das mit der Optimierungseinheit (22) gekoppelte Energienetz (Smart Grid) zur Laufzeit zu dem jeweiligen Marktpreis eingekauft wird.

11. Verfahren nach zumindest einem der vorhergehenden Ansprüche,
**dadurch gekennzeichnet ,**
**dass** der Typ der produzierten Güter ebenfalls messtechnisch erfasst wird.

12. System (10) zur Optimierung eines Produktionsprozesses (12), umfassend eine
- Optimierungseinheit (22) zur Vorgabe einer Soll-Menge produzierter Güter für den Produktionsprozess;
- ein mit der Optimierungseinheit (22) kommunikativ gekoppeltes Unternehmens-Ressourcen-Planungssystem (24) zur Übertragung eines aktuellen Marktwertes zu produzierender Güter, von Fixkosten und/oder von variabler Kosten;
- ein mit der Optimierungseinheit (22) kommunikativ gekoppeltes Energienetz (Smart Grid) (26) zur Bereitstellung aktueller Energiepreise;
- ein oder mehrere mit der Optimierungseinheit (22) verbundene Energiemesser (28; 28.1 ... 28.n) zur Übertragung des Energieverbrauchs des Produktionsprozesses (20) oder von Teilprozessen (20.1 ... 20n);
- ein oder mehrere mit der Optimierungseinheit (22) verbundene Erfassungseinheiten (30; 30.1 ... 30.n) zur Übertragung einer Ist-Menge produzierter Güter;
wobei die Optimierungseinheit eine Recheneinheit zur Berechnung der Gesamtkosten eines ersten Durchlaufs des Produktionsprozesses aus Energiekosten, Fixkosten und ggfs. variablen Kosten und zur Berechnung des Gesamterlöses aus Marktwert und Menge und/oder Typ der produzierten Güter aufweist und wobei die Recheneinheit einen Vergleicher zum Vergleich der Gesamtkosten mit dem Gesamterlös aufweist, mit einem Soll-Wert-Ausgang, an dem die Soll-Menge zu produzierender Güter zur Einstellung eines optimalen Betriebspunktes für weitere Durchläufe des Produktionsprozesses (20) oder der Teilprozesse (20.1 ... 20.n) bereitgestellt wird.

13. System nach Anspruch 12,
**dadurch gekennzeichnet,**
**dass** der Energiemesser (28) ein Messgerät zur direkten Erfassung der benötigten Energie wie z.B. elektrische Energie, Wäremenergie oder zur indirekten Erfassung der benötigten Energie wie z. B. Mittel zur Erfassung des Stromflusses, einer Gasströmung, einer Wasserströmung oder einer Luftströmung und der Berechnung der Energiemenge ist.

14. System nach Anspruch 12 oder 13,
**dadurch gekennzeichnet,**
**dass** das Erfassungsmittel (30) z. B. ein RFID-Reader oder ein Durchflussmesser ist.
